# EUROPÄISCHE PATENTSCHRIFT

(11) **EP 1 025 363 B1**
(45) Veröffentlichungstag und Bekanntmachung des Hinweises auf die Patenterteilung: **04.09.2002**
(21) Anmeldenummer: 98965622.8
(22) Anmeldetag: 09.10.1998
(51) Int. Cl.: F04C 15/04, F04C 2/344

(54) **VERDRÄNGERPUMPE**
POSITIVE-DISPLACEMENT PUMP
POMPE VOLUMETRIQUE

(30) Priorität: 15.10.1997 DE 19745448
(43) Veröffentlichungstag der Anmeldung: 09.08.2000
(73) Patentinhaber: ZF FRIEDRICHSHAFEN Aktiengesellschaft, 88038 Friedrichshafen (DE)
(72) Erfinder: MERZ, Johann, D-73527 Schwäbisch Gmünd (DE)
(74) Vertreter: Wiechmann, Manfred
(86) Internationale Anmeldenummer: EP9806401
(87) Internationale Veröffentlichungsnummer: WO99019629

(56) Entgegenhaltungen:
- DE-A- 4 101 210
- DE-A- 4 119 207
- DE-A- 4 433 598
- GB-A- 716 462
- US-A- 4 251 193

## Beschreibung

Die Erfindung betrifft eine Verdrängerpumpe zum Fördern von Druckmittel aus einem Behälter zu einem Verbraucher, insbesondere einer Hilfskraftlenkung für Kraftfahrzeuge. Im Inneren eines Gehäuses ist ein Pumpenpaket, bestehend aus einem Rotor, einem Kurvenring und mehreren Arbeitsschiebern, eingesetzt. Die Arbeitsschieber können beispielsweise als Flügel einer Flügelzellenpumpe oder als Rollen einer Rollenzellenpumpe ausgebildet sein. Zwischen dem Kurvenring und dem Rotor sind Arbeitskammern gebildet, die durch die Arbeitsschieber unterteilt sind und die in axialer Richtung durch Steuerplatten begrenzt sind. Ein Bypass-Stromregelventil dient zur Regelung eines Nutzstromes. Eine Drossel des Bypass-Stromregelventils ist durch eine Blende gebildet, die eine veränderbare Querschnittsfläche aufweist. Dabei ist die Querschnittsfläche in Abhängigkeit von der Verschiebung eines gegen die Kraft einer Feder verschiebbaren Kolbens veränderbar.

Eine derartige Verdrängerpumpe ist bekannt aus der DE-A1-41 01 210. Bei dieser Pumpe ist die Drosselblende des Bypass-Stromregelventils an einem beweglichen Kolben angeordnet. Dadurch regelt das Stromregelventil die Verdrängerpumpe mit einer fallenden Strömungscharakteristik. Dies bedeutet, daß der Förderstrom der Pumpe bei steigender Drehzahl abgeregelt wird. Der geringere Förderstrom bewirkt einen geringeren Durchlaufdruck im Lenksystem und damit eine Absenkung der Leistungsaufnahme.

Bei einer anderen bekannten Verdrängerpumpe (DE-A1-44 33 598) wird eine Regeldrossel förderstromabhängig verschoben. Dies bedeutet, daß die Regelung druckunabhängig erfolgt. Das Verstellsignal ist in diesem Fall ein Impuls. Eine druckabhängige Regelung ist nicht möglich.

Bei derartigen Pumpen tritt der Effekt der verringerten Leistungsaufnahme jedoch nur bei höheren Drehzahlen ein.

Der Erfindung liegt die Aufgabe zugrunde, mit einfachen Mitteln eine Verdrängerpumpe zu schaffen, bei der eine Regelung auf einen höheren Abregelstrom bei einem Druckanstieg sehr schnell erfolgt. Insbesondere soll die Regelung auch bei kleineren Drehzahlen eintreten.

Diese Aufgabe wird durch die im Anspruch 1 gekennzeichnete Verdrängerpumpe gelöst. Dazu wird die Querschnittsfläche der blendenartigen Drosselöffnung bei ansteigendem, an der blendenartigen Drosselöffnung anstehendem Druck vergrößerbar ausgeführt. Der Kolben ist durch einen an der blendenartigen Drosselöffnung anstehenden Druck ausschließlich gegen die Kraft der Feder verschiebbar, so daß die Querschnittsfläche der blendenartigen Drosselöffnung druckabhängig veränderbar ist. Der Kolben kann sich dadurch leicht und schnell in Abhängigkeit vom Förderdruck einstellen. Bei niederen Drücken, beispielsweise bei 4 bar, befindet sich der Kolben in einer Position, in der die Querschnittsfläche der blendenartigen Drosselöffnung teilweise verschlossen ist. Bei steigendem Druck beginnt sich der Kolben gegen die Kraft der Feder zu verschieben. Dabei wird die offene Querschnittsfläche der blendenartigen Drosselöffnung vergrößert.

Vorteilhafte und zweckmäßige Ausgestaltungen der Erfindung sind in den Unteransprüchen angegeben. Besonders zweckmäßig ist es, wenn die blendenartige Drosselöffnung gegenüber dem Gehäuse unverschiebbar angeordnet wird. Der Kolben wird dann als Regelstift ausgebildet und wirkt mit der blendenartigen Drosselöffnung zusammen. Dabei ist der Regelstift relativ zu der blendenartigen Drosselöffnung und unabhängig von dem Kolben des Bypass-Stromregelventils verschiebbar. Der Regelstift weist an seinem einen Ende eine profilierte Spitze auf und ist an seinem anderen Ende, auf seiner der profilierten Spitze abgewandten Seite, durch die Feder in Richtung auf eine Verkleinerung der Querschnittsfläche der Blende beaufschlagt. Zweckmäßigerweise ist die Spitze als Kegelstumpf ausgebildet.

In einem anderen Ausführungsbeispiel ist die Blende ebenfalls gegenüber dem Gehäuse unverschiebbar angeordnet. Der Kolben ist jedoch als Regelkolben ausgebildet und wirkt mit der Blende zusammen. Der Regelkolben weist an seinem der Blende zugewandten Ende eine im wesentlichen ebene Stirnfläche mit einer Ausnehmung auf, die seine Stirnfläche mit seiner Umfangsfläche verbindet. Die Ausnehmung des Regelkolbens ist zweckmäßigerweise in der Form eines Querschlitzes ausgebildet.

Um eventuell austretendes Lecköl aus dem Raum, der die Feder enthält, zu entfernen, ist dieser Raum durch einen Kanal mit einem Niederdruckraum verbunden ist. Der Niederdruckraum kann durch die Umgebung der Pumpe oder durch einen Saugraum der Verdrängerpumpe gebildet sein.

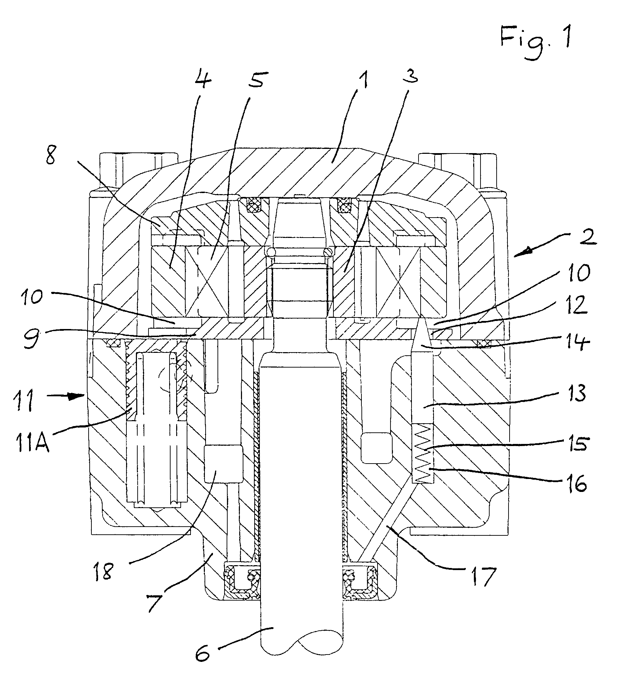

Im folgenden wird die Erfindung anhand zweier in der Zeichnung dargestellter Ausführungsbeispiele näher erläutert. Es zeigen
Fig. 1 einen Längsschnitt durch die erfindungsgemäße Verdrängerpumpe in einem ersten Ausführungsbeispiel,
Fig. 2 einen Teilschnitt durch die Verdrängerpumpe im Bereich des Regelkolbens in einem zweiten Ausführungsbeispiel.

Die Erfindung wird anhand des Beispieles einer Flügelzeilenpumpe beschrieben. Mit gleicher Wirkung kann die Erfindung jedoch auch bei anderen Verdrängerpumpen, beispielsweise bei Rollenpumpen, angewendet werden.

In einem Gehäuse 1 ist ein Pumpenpaket 2 eingesetzt, das aus einem Rotor 3, einem Kurvenring 4 und mehreren Arbeitsschiebern 5 besteht. Der Rotor 3 ist über eine Antriebswelle 6 in einem Lagergehäuse 7 gelagert.

Zwischen den Arbeitsschiebern 5 und dem Kurvenring 4 sind nicht dargestellte Arbeitskammern in der Form von Verdrängerzellen gebildet, die an ihren beiden axialen Seiten von zwei Steuerplatten 8 und 9 begrenzt sind. In den Steuerplatten 8 und 9 sind in bekannter Weise Drucköffnungen 10 und nicht dargestellte Saugöffnungen vorgesehen.

Ein Bypass-Stromregelventil 11 ist in bekannter Weise in dem Gehäuse 1 angeordnet. Eine Blende 12 des Bypass-Stromregelventils 11 ist in der einen Stirnplatte 9 angeordnet, die zwischen dem Pumpenpaket 2 und dem Lagergehäuse 7 liegt.

Mit der Blende 12 wirkt ein Regelstift 13 zusammen. Der Regelstift 13 weist an seinem einen Ende eine profilierte Spitze 14 auf. Die Spitze 14 ist vorzugsweise in der Form eines Kegelstumpfes ausgebildet. An seinem anderen Ende ist der Regelstift 13 durch eine Feder 15 beaufschlagt, die in einem Raum 16 eingesetzt ist. Der Raum 16 ist über einen Kanal 17 mit einem Niederdruckraum 18 der Verdrängerpumpe verbunden, der zweckmäßigerweise der Saugraum der Pumpe ist.

Die Feder 15 beaufschlagt den Regelstift 13 in Richtung auf seine Spitze 14, so daß die kegelstumpfförmige Spitze 14 im Bereich der Blende 12 nur eine relativ kleine Querschnittsfläche der Blende 12 offen läßt. Dieser Zustand stellt sich bei kleineren Drücken von beispielsweise 4 bar ein. Steigt der Druck in der Drucköffnung 10 an, so beginnt sich der Regelstift 13 gegen die Kraft der Feder 15 in den Raum 16 hinein zu verschieben. Dabei wird die offene Querschnittsfläche der Blende 12 vergrößert, so daß der Förderstrom der Verdrängerpumpe ansteigen kann.

In dem zweiten Ausführungsbeispiel ist anstelle des Regelstiftes 13 ein Regelkolben 19 eingesetzt, der an seinem der Blende 12 benachbarten Ende eine im wesentlichen ebene Stirnfläche aufweist. Eine Ausnehmung 20 verbindet an diesem Ende des Regelkolbens 19 die Stirnfläche mit seiner Umfangsfläche. Dadurch ist in Ausgangsstellung des Regelkolbens 19, in der seine Stirnfläche an der Steuerplatte 9 anliegt, ein relativ kleiner Durchflußquerschnitt von der Blende 12 geöffnet. Sobald der Regelkoben 19 gegen die Kraft der Feder 15 in den Raum 16 hinein verschoben wird, öffnet sich relativ schnell ein größerer Durchflußquerschnitt, so daß der Förderstrom der Verdrängerpumpe ansteigen kann.

Bei den beiden Ausführungsbeispielen ist die Blende 12 gegenüber dem Gehäuse 1 unverschiebbar angeordnet. Mit gleicher Wirkung kann die Blende jedoch an dem Kolben, beispielsweise an dem Regelkolben 19, angeordnet sein. Die Blende wirkt dann mit einer in dem Gehäuse 1 ausgebildeten Steuerkante zusammen. Diese Ausführungsform ist leicht vorstellbar und wird deshalb nicht näher beschrieben oder dargestellt.

Bei den beiden Ausführungsbeispielen ist die Blende 12 als Bohrung in der Steuerplatte 9 ausgeführt. Mit gleicher Wirkung kann die Blende jedoch in einem getrennten Drosseleinsatz in der Steuerplatte 9 angeordnet sein.

### Bezugszeichen

- 1: Gehäuse
- 2: Pumpenpaket
- 3: Rotor
- 4: Kurvenring
- 5: Arbeitsschieber
- 6: Antriebswelle
- 7: Lagergehäuse
- 8: Steuerplatte
- 9: Steuerplatte
- 10: Drucköffnung
- 11: Bypass-Stromregelventil
- 11A: Kolben
- 12: Blende
- 13: Regelstift
- 14: Spitze
- 15: Feder
- 16: Raum
- 17: Kanal
- 18: Niederdruckraum
- 19: Regelkolben
- 20: Ausnehmung

## Patentansprüche

1. Verdrängerpumpe zum Fördern von Druckmittel aus einem Behälter zu einem Verbraucher, insbesondere einer Hilfskraftlenkung für Kraftfahrzeuge, mit folgenden Merkmalen:
- Im Inneren eines Gehäuses (1) ist ein Pumpenpaket (2), enthaltend einen Rotor (3), einen Kurvenring (4) und mehrere Arbeitsschieber (5), eingesetzt,
- zwischen dem Kurvenring (4) und dem Rotor (3) sind durch die Arbeitsschieber (5) unterteilte Arbeitskammern gebildet, die in axialer Richtung durch Steuerplatten (8, 9) begrenzt sind,
- ein Bypass-Stromregelventil (11) mit einem Kolben (11A) dient zur Regelung eines Nutzstromes,
- eine Drossel des Bypass-Stromregelventils (11) ist durch eine blendenartige Drosselöffnung (12) gebildet, die eine veränderbare Querschnittsfläche aufweist,
- die Querschnittsfläche ist in Abhängigkeit von der Verschiebung eines gegen die Kraft einer Feder (15) verschiebbaren Kolbens veränderbar,
- die Querschnittsfläche der blendenartigen Drosselöffnung (12) wird bei ansteigendem, an der blendenartigen Drosselöffnung (12) anstehendem Druck vergrößert,
- der Kolben ist durch einen an der blendenartigen Drosselöffnung (12) anstehenden Druck gegen die Kraft der Feder (15) verschiebbar, so daß die Querschnittsfläche der blendenartigen Drosselöffnung (12) druckabhängig veränderbar ist,
**gekennzeichnet durch** folgende Merkmale:
- ein die Feder (15) enthaltender Raum (16) an der der Stirnfläche abgewandten Seite des Regelkolbens (19) ist **durch** einen Kanal (17) mit einem Niederdruckraum (18) verbunden.

2. Verdrängerpumpe nach Anspruch 1, **gekennzeichnet durch** folgende Merkmale:
- Die blendenartige Drosselöffnung (12) ist gegenüber dem Gehäuse (1) unverschiebbar angeordnet,
- der Kolben ist als Regelstift (13) ausgebildet und wirkt mit der blendenartige Drosselöffnung (12) zusammen,
- der Regelstift (13) ist relativ zu der blendenartige Drosselöffnung (12) verschiebbar,
- der Regelstift (13) ist unabhängig von dem Kolben (11A) des Bypass-Stromregelventils (11) verschiebbar,
- der Regelstift (13) weist an seinem einen Ende eine profilierte Spitze (14) auf,
- der Regelstift (13) ist an seinem anderen Ende, auf seiner der profilierten Spitze abgewandten Seite, **durch** die Kraft der Feder (15) in Richtung auf eine Verkleinerung der Querschnittsfläche der blendenartige Drosselöffnung (12) beaufschlagt.

3. Verdrängerpumpe nach Anspruch 2, **dadurch gekennzeichnet, daß** die Spitze (14) des Regelstiftes (13) in der Form eines Kegelstumpfes ausgebildet ist.

4. Verdrängerpumpe nach Anspruch 1, **gekennzeichnet durch** folgende Merkmale:
- Die blendenartige Drosselöffnung (12) ist gegenüber dem Gehäuse (1) unverschiebbar angeordnet,
- der Kolben ist als Regelkolben (19) ausgebildet und wirkt mit der blendenartigen Drosselöffnung (12) zusammen,
- der Regelkolben (19) weist an seinem der blendenartigen Drosselöffnung (12) zugewandten Ende eine im wesentlichen ebene Stirnfläche mit einer Ausnehmung (20) auf, die seine Stirnfläche mit seiner Umfangsfläche verbindet.

5. Verdrängerpumpe nach Anspruch 2, **dadurch gekennzeichnet, daß** die Ausnehmung (20) des Regelkolbens (19) in der Form eines Querschlitzes ausgebildet ist.

6. Verdrängerpumpe nach Anspruch 1, **dadurch gekennzeichnet, daß** der Niederdruckraum (18) ein Saugraum der Verdrängerpumpe ist.

## Claims

1. Positive-displacement pump for feeding pressure medium from a container to a consumer, in particular to a power steering system for motor vehicles, having the following features:
- a pump assembly (2) containing a rotor (3), a cam ring (4) and a plurality of working slides (5) is inserted in the interior of a housing (1),
- working chambers which are divided by the working slides (5) and are bounded in the axial direction by control plates (8, 9) are formed between the cam ring (4) and the rotor (3),
- a bypass flow-regulating valve (11) having a piston (11A) is used for regulating a useful flow,
- a constriction of the bypass flow-regulating valve (11) is formed by an aperture-like constricting opening (12) which has a variable cross-sectional surface,
- the cross-sectional surface can be varied as a function of the displacement of a piston which can be displaced counter to the force of a spring (15),
- the cross-sectional surface of the aperture-like constricting opening (12) is increased as the pressure present at the aperture-like constricting opening (12) rises,
- the piston can be displaced counter to the force of the spring (15) by a pressure present at the aperture-like constricting opening (12), with the result that the cross-sectional surface of the aperture-like constricting opening (12) can be varied as a function of pressure,
**characterized by** the following features:
- a space (16), which contains the spring (15), on that side of the regulating piston (19) which faces away from the end surface is connected to a low pressure space (18) by a channel (17).

2. Positive-displacement pump according to Claim 1, **characterized by** the following features:
- the aperture-like constricting opening (12) is arranged non-displaceably with respect to the housing (1),
- the piston is designed as a regulating pin (13) and interacts with the aperture-like constricting opening (12),
- the regulating pin (13) can be displaced relative to the aperture-like constricting opening (12),
- the regulating pin (13) can be displaced independently of the piston (11A) of the bypass flow-regulating valve (11),
- the regulating pin (13) has a profiled tip (14) at its one end,
- the regulating pin (13) is acted upon at its other end, on its side facing away from the profiled tip, by the force of the spring (15) with the aim of reducing the cross-sectional surface of the aperture-like constricting opening (12).

3. Positive-displacement pump according to Claim 2, **characterized in that** the tip (14) of the regulating pin (13) is designed in the form of a truncated cone.

4. Positive-displacement pump according to Claim 1, **characterized by** the following features:
- the aperture-like constricting opening (12) is arranged non-displaceably with respect to the housing (1),
- the piston is designed as a regulating piston (19) and interacts with the aperture-like constricting opening (12),
- the regulating piston (19) has, at is end facing the aperture-like constricting opening (12), an essentially planar end surface having a recess (20) which connects its end surface to its circumferential surface.

5. Positive-displacement pump according to Claim 2, **characterized in that** the recess (20) of the regulating piston (19) is designed in the form of a transverse slot.

6. Positive-displacement pump according to Claim 1, **characterized in that** the low pressure space (18) is a suction space of the positive-displacement pump.

## Revendications

1. Pompe volumétrique pour refouler du fluide sous pression depuis un récipient jusqu'à un consommateur, en particulier une direction assistée pour véhicules automobiles, comprenant les caractéristiques suivantes :
- à l'intérieur d'un corps (1) est inséré un groupe de pompe (2), comprenant un rotor (3), un anneau à courbe (4) et plusieurs tiroirs de travail (5),
- entre l'anneau à courbe (4) et le rotor (5) sont formées des chambres de travail divisées par les tiroirs de travail (5), lesquelles sont limitées dans la direction axiale par des plaques de commande (8, 9),
- une soupape de régulation de l'écoulement à dérivation (11) avec un piston (11A) sert à réguler un écoulement utile,
- un étranglement de la soupape de régulation de l'écoulement à dérivation (11) est formé par une ouverture d'étranglement en forme d'écran (12), qui présente une surface en section transversale variable,
- la surface en section transversale est variable en fonction du déplacement d'un piston déplaçable à l'encontre de la force d'un ressort (15),
- la surface en section transversale de l'ouverture d'étranglement en forme d'écran (12) est agrandie pour une pression croissante au niveau de l'ouverture d'étranglement en forme d'écran (12),
- le piston est déplaçable par une pression au niveau de l'ouverture d'étranglement en forme d'écran (12) à l'encontre de la force du ressort (15), de sorte que la surface en section transversale de l'ouverture d'étranglement en forme d'écran (12) soit variable en fonction de la pression,
**caractérisée par** les caractéristiques suivantes :
- une chambre (16) contenant le ressort (15) du côté du piston de régulation (19) opposé à la face frontale est connectée par un conduit (17) à une chambre de basse pression (18).

2. Pompe volumétrique selon la revendication 1,
**caractérisée par** les caractéristiques suivantes :
- l'ouverture d'étranglement en forme d'écran (12) est disposée de manière fixe par rapport au corps (1),
- le piston est réalisé en tant que pointe de régulation (13) et coopère avec l'ouverture d'étranglement en forme d'écran (12),
- la pointe de régulation (13) est déplaçable par rapport à l'ouverture d'étranglement en forme d'écran (12),
- la pointe de régulation (13) est déplaçable indépendamment du piston (11A) de la soupape de régulation de l'écoulement à dérivation (11),
- la pointe de régulation (13) présente, à l'une de ses extrémités, une pointe profilée (14),
- la pointe de régulation (13) est sollicitée à son autre extrémité, sur son côté opposé à la pointe profilée, par la force du ressort (15) dans la direction d'un rétrécissement de la surface en section transversale de l'ouverture d'étranglement en forme d'écran (12).

3. Pompe volumétrique selon la revendication 2, **caractérisée en ce que** la pointe (14) de la pointe de régulation (13) est réalisée avec une forme tronconique.

4. Pompe volumétrique selon la revendication 1, **caractérisée par** les caractéristiques suivantes :
- l'ouverture d'étranglement en forme d'écran (12) est disposée fixe par rapport au corps (1),
- le piston est réalisé en tant que piston de régulation (19) et coopère avec l'ouverture d'étranglement en forme d'écran (12),
- le piston de régulation (19) présente, à son extrémité tournée vers l'ouverture d'étranglement en forme d'écran (12), une face frontale essentiellement plane avec un évidement (20) qui relie sa face frontale à sa face périphérique.

5. Pompe volumétrique selon la revendication 2, **caractérisée en ce que** l'évidement (20) du piston de régulation (19) est réalisé en forme de fente transversale.

6. Pompe volumétrique selon la revendication 1, **caractérisée en ce que** la chambre de basse pression (18) est une chambre d'aspiration de la pompe volumétrique.
